# EUROPÄISCHE PATENTSCHRIFT

(11) **EP 1 409 300 B1**
(45) Veröffentlichungstag und Bekanntmachung des Hinweises auf die Patenterteilung: **30.03.2005**
(21) Anmeldenummer: 02751143.5
(22) Anmeldetag: 17.07.2002
(51) Int. Cl.: B60R 21/20

(54) **TÜRVERKLEIDUNG EINES PERSONENKRAFTWAGENS MIT INTEGRIERTEM SEITENAIRBAG-MODUL**
DOOR LINING FOR A PRIVATE CAR, COMPRISING AN INTEGRATED LATERAL AIRBAG MODULE
HABILLAGE DE PORTIERE D'UNE VOITURE PARTICULIERE, COMPORTANT UN MODULE AIRBAG LATERAL INTEGRE

(30) Priorität: 21.07.2001 DE 10135614
(43) Veröffentlichungstag der Anmeldung: 21.04.2004
(73) Patentinhaber: Findlay Industries Deutschland GmbH, 82538 Geretsried (DE)
(72) Erfinder: RIESINGER, Stefan, 82515 Wolfratshausen (DE); DYCKERHOFF, Dirk, 82538 Geretsried (DE)
(74) Vertreter: Jönsson, Hans-Peter, Dr.
(86) Internationale Anmeldenummer: PCT/EP2002/007939
(87) Internationale Veröffentlichungsnummer: WO 2003/011657

(56) Entgegenhaltungen:
- EP-A- 0 949 124
- EP-A- 0 968 889
- DE-A- 19 720 585

## Beschreibung

Gegenstand der Erfindung ist eine Türverkleidung mit Seitenairbag-Modul eines Personenkraftwagens, deren Trägerteil mit einem Seitenaufprallschutz in Form eines Airbags versehen ist.

DE 195 16 230 A1 betrifft eine Airbag-Abdeckung, insbesondere für einen Airbag als Frontal- und Seitenaufprallschutz in einem Kraftfahrzeug, mit einem die Airbag-Betriebseinrichtungen sowie das Airbag-Aufprallpolster abdeckenden Formteil (5), das Sollbruchstellen (2) aufweist, die bei Auslösung des Airbags durch das Airbag-Aufprallpolster aufbrechbar sind und ein Austreten des Airbag-Aufprallpolsters gewährleisten und mit einer das Formteil (5) überdeckenden Sichtbedeckung (4), wobei die Sichtbedeckung (4) partielle Materialdickenreduzierungen (1) aufweist, die im Bereich der Sollbruchstellen (2) des Formteils (5) verlaufen. Des Weiteren betrifft die Erfindung die Verwendung einer derartigen Airbag-Abdeckung, ein Verfahren zur Herstellung einer Sichtbedeckung für eine Airbag-Abdeckung und eine Schablone zur Verwendung in einem Verfahren zur Herstellung einer Sichtbedeckung für eine Airbag-Abdeckung.

DE 195 05 214 A1 betrifft ein Innenverkleidungsteil für eine Seitentür eines Personenkraftwagens, die mit einem Seitenaufprallschutz in Form eines Airbags versehen ist, der einem Ausschnitt des Innenverkleidungsteiles angeordnet ist, dadurch gekennzeichnet, dass in einem Austrittsbereich des Ausschnitts ein Trichterrand zur Zwangsführung des Airbags vorgesehen ist, und dass der Ausschnitt von einem Formschaumteil überdeckt ist, das mit einer quer über die Breite des Ausschnitts verlaufenden Sollbruchlinie auf halber Höhe das zum Wageninneren hin durch eine fest mit dem Innenverkleidungsteil verbundene einteilige Dekorhaut überdeckt ist, die auf Höhe der Sollbruchlinie zweigeteilt ist, wobei die beiden Teile der Dekorhaut mittels einer bei einer Airbagauslösung aufreißenden Naht miteinander verbunden sind.

Dem eingangs genannten Stand der Technik ist gemeinsam, dass vom Fahrzeuginneren die Sollbruchlinie der Dekorschicht mehr oder weniger deutlich erkennbar ist.

DE 43 44 523 A1 betrifft ein Abdeckelement für eine Airbag-Aufnahmekammer (2), die im Bereich ihrer den Insassen eines Fahrzeugs zugewandte Seite (4) abgedeckt ist und sich für den Durchtritt eines aufblasbaren Kissens öffnet. Der Kern der Erfindung besteht darin, dass als Abdeckelement (7, 7a) mindestens ein hautartiges Element (7', 7a') mit einer vorgegebenen Materialstärke (8) vorgesehen ist und das hautartige Element (7', 7a') auf seiner airbagseitigen, dem Kissen (5, 5a) zugewandten Rückseite (9, 9a) mindestens längs einer Linie (10, 10a) einen geringeren Querschnitt aufweist.

Die gattungsbildende DE 197 20 585 A1 betrifft eine Seitenaufprallschutzeinrichtung für einen Insassen eines Fahrzeuges in Form eines aufblasbaren Gassackes, die eine an einem aufrechten Wandabschnitt eines vorgelagerten Verkleidungsteiles angeordnete Austrittseinrichtung umfasst, die in Ruhestellung des Gassackes durch eine Abdeckung verschlossen ist. Die Abdeckung besteht aus einem äußeren, am angrenzenden Verkleidungsteiles befestigten Rahmenteil und zumindest zwei einstückig mit dem äußeren Rahmenteil verbundenen Klapphälften, die auf der dem Fahrgastraum zugekehrten Seite mit einem dekorativen Bezug versehen sind. Der Bezug weist eine dem gemeinsamen Verbindungsbereich beider Klapphälften vorgelagert eine Reißnaht auf.

Es ist daher die Aufgabe der vorliegenden Erfindung eine Türverkleidung eines Personenkraftwagens, deren Trägerteil mit einem Seitenaufprallschutz in Form eines Airbags versehen ist, bereitzustellen, bei der zum einen vom Fahrzeuginneren her nicht erkennbar ist, dass sich im Bereich der Dekorschicht ein Seitenaufprallschutz in Form eines Airbags verbirgt. Eine weitere Aufgabe der Erfindung besteht in der sicheren Befestigung der beim Entfalten des Airbags abgelösten Teile der Airbag-Abdeckung. Weiterhin besteht die Aufgabe der Erfindung in der Verbesserung der Griffeigenschaften im Bereich des Airbag-Moduls insoweit, dass keine sichtbaren oder fühlbaren Bauteilschwächungen an der Oberfläche vorhanden sind.

In einer ersten Ausführungsform wird die vorgenannte Aufgabe gelöst durch eine Türverkleidung mit Seitenairbag-Modul eines Personenkraftwagens nach dem Anspruch 1.

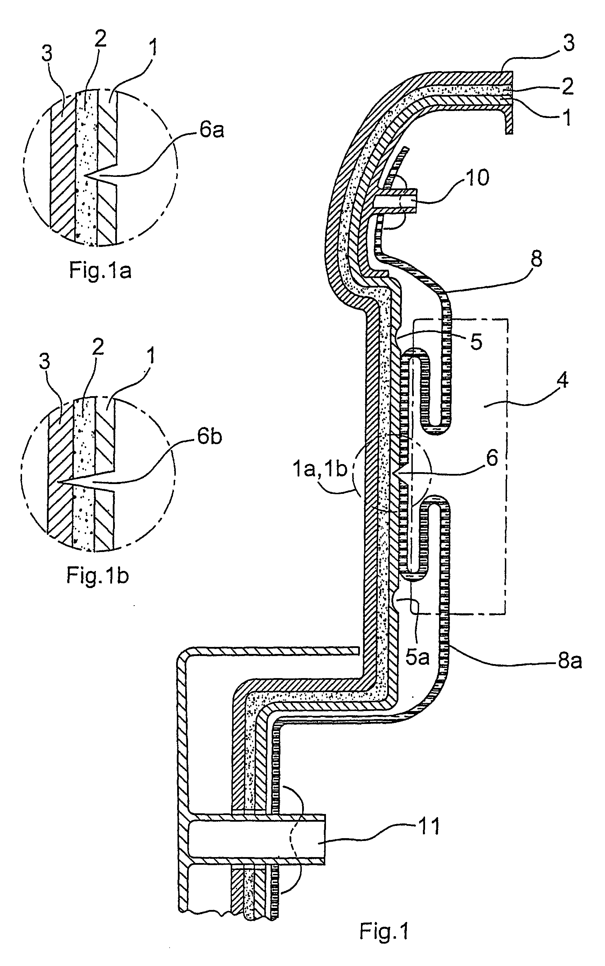

In Fig. 1 wird dargestellt, dass durch das Verschließen des Ausschnitts mittels des Trägerteils 1 und der Schaumstofffolie 2, die sich über einen wesentlichen Bereich des Ausschnitts des Seitenaufprallschutzes erstrecken, wird die Airbageinheit praktisch vollständig durch das formstabile Trägerteil 1 abgedeckt wird. Die Schaumstofffolie 2 wiederum wird durch die einteilig ausgeführte Dekorschicht 3 vollkommen verdeckt, so dass sich für die Türverkleidung ein optisch einheitliches Bild ergibt.

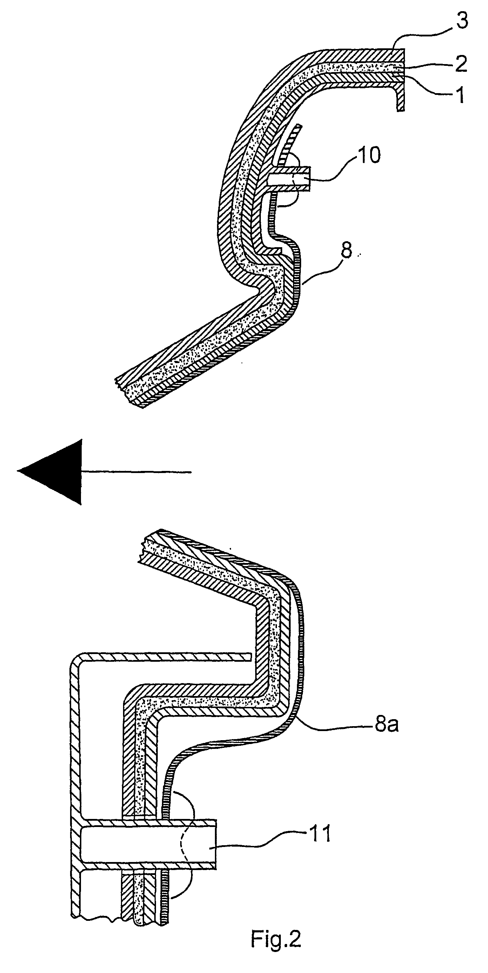

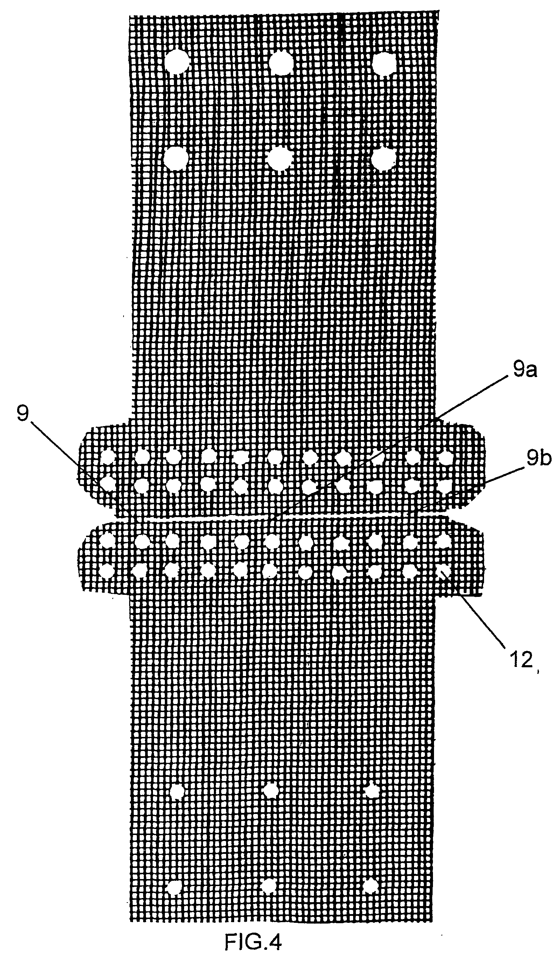

Durch die rückseitig in das Trägerteil 1 und gegebenenfalls in die Schaumstofffolie 2 und die Dekorschicht 3 eingebrachte Sollbruchlinie 6, 6a, 6b reißt diese bei einer Auslösung des Airbags und sichert die Funktion der Airbag-Einheit als Seitenaufprallschutz. Gegenüber einem Stand der Technik, bei dem der vollständige Ausschnitt des Seitenairbags mit einer rundumlaufenden Sollbruchlinie versehen ist, kann verhindert werden, dass großflächige Lappen der Dekorschicht 3 in den Innenraum des Fahrzeugs gelangen, wenn der Airbag ausgelöst wird. Die Scharnierfunktionen 5, 5a sichern das Ablösen von Teilen der Abdeckung und fördern das genaue Öffnen über den Seitenairbag, wie in Fig. 2 dargestellt.

Für den Fall, dass jedoch Bereiche der Dekorschicht 3 sowie der Schaumstofffolie 2 einschließlich des Trägerteils 1 vollständig abgelöst werden sollten, werden diese durch die Halteelemente 8 oder 8a daran gehindert, in den Innenraum des Fahrzeugs einzutreten.

Die Fig. 1a und 1b stellen bevorzugte Ausführungsformen der Erfindung dar. Wenn in Kongruenz mit der Sollbruchlinie 6 des Trägerteils 1, die Sollbruchlinie 6a der Schaumstofffolie 2 und eine weitere Sollbruchlinie 6b der Dekorschicht 3 vorhanden ist, so können die Druckkräfte beim Auslösen des Airbags so gerichtet werden, dass die Dekorschicht 3 einschließlich der Schaumstofffolie 2 in etwa auf halber Höhe reißt. Hierbei ist es besonders vorteilhaft, die Sollbruchlinien 6, 6a, 6b so auszulegen, dass sie über die gesamte Länge des Ausschnitts aufreißen und die Trägerteile 1 mit der Dekorschicht 3 über die Schaumstofffolie 2 verbunden bleiben.

In der Fig. 2 wird ein entsprechendes Innenverkleidungsteil nach Öffnung des Airbags dargestellt, wobei die Sollbruchlinie 6 des Trägerteils 1 aufgerissen ist. Auch die darüber befindliche Schaumstofffolie 2 ist ebenfalls aufgerissen. Die Dekorschicht 3 reißt ebenfalls nur an der Sollbruchlinie 6b, so dass die den Ausschnitt 4 abdeckenden Teile der Dekorschicht 3 an Ort und Stelle verbleiben.

In einer bevorzugten Ausführungsform der vorliegenden Erfindung besteht das Trägerteil 1 aus naturfaserverstärkten Epoxidharz oder naturfaserverstärkten Polyurethan, einem Spritzgussteil oder einem naturfaserverstärktem Polypropylen. Somit wird das Trägerteil 1 aus an sich im Stand der Technik bekannten Materialien hergestellt.

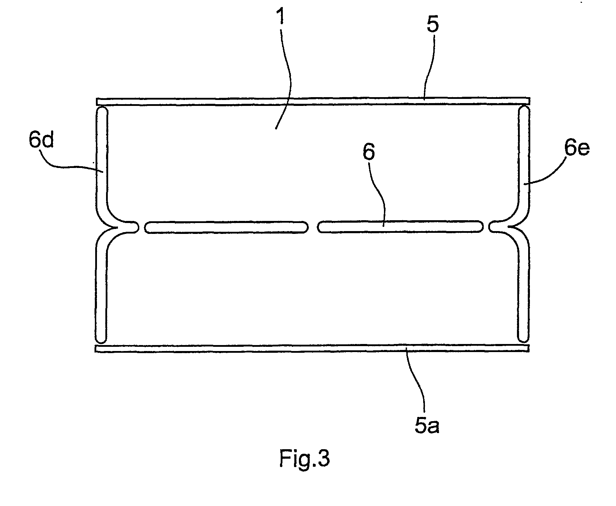

Wie in Fig. 3 dargestellt, weist das Trägerteil 1 vorzugsweise drei Sollbruchlinien 6, 6d, 6e auf. Während die Sollbruchlinie 6 in etwa den Ausschnitt entlang der Scharniergelenke 5, 5a hälftig teilt, ist es besonders bevorzugt, die Sollbruchlinien 6d und 6e am oberen und unteren Rand des Scharniergelenks 5, 5a verlaufen zu lassen. Gleiches gilt für die Sollbruchlinien 6d und 6e des Trägerteils 1, die ebenfalls aufgerissen sind und somit ein großflächiges Austreten des Airbags ermöglichen. Die Sollbruchlinien 6, 6d, 6e und die Scharniergelenke 5, 5a können durch Fräsen des Trägerteils 1 hergestellt werden. Die Schaumstofffolie 2 und die Dekorschicht 3 muss nicht geschwächt werden, da ein definiertes Aufreißen der Dekorschicht 3 durch die Kanten der Klappen des Trägerteils 1, die unmittelbar unter der Dekorschicht 3 liegen, erreicht wird. Dies bedingt erhebliche Vorteile bezüglich der Sichtbarkeit und Reduzierung der Dekorschichtdicken.

Besonders bevorzugt im Sinne der vorliegenden Erfindung besteht die flächig über dem Trägerteil 1 befindliche Schaumstofffolie 2 aus einem PUR-, PP- und/oder PE-Schaumstoff, dessen Härte je nach Herstellungsbedingungen eingestellt werden kann.

Als Dekorschicht 3 kann ein sehr unterschiedliches Material verwendet werden, insbesondere bietet sich Kunststofffolie (Kompaktfolien, Slush-, Gieß- und Sprühhäute), Naturleder und/oder Kunstleder an. Ein Stoffmaterial ist mit Hilfe der vorliegenden Erfindung direkt einsetzbar, erfordert nicht notwendigerweise eine Zwischenschicht zwischen der Schaumstofffolie 2 und der Dekorschicht 3.

In einer bevorzugten Ausführungsform der vorliegenden Erfindung besteht das Trägerteil 1 aus naturfaserverstärkten Epoxidharz oder naturfaserverstärkten Polyurethan, einem Spritzgussteil oder einem naturfaserverstärktem Polypropylen. Somit wird das Trägerteil 1 aus an sich im Stand der Technik bekannten Materialien hergestellt.

Wie in Fig. 3 dargestellt, weist das Trägerteil 1 vorzugsweise drei Sollbruchlinien 6, 6d, 6e auf. Während die Sollbruchlinie 6 in etwa den Ausschnitt entlang der Scharniergelenke 5, 5a hälftig teilt, ist es besonders bevorzugt, die Sollbruchlinien 6d und 6e am oberen und unteren Rand des Scharniergelenks 5, 5a verlaufen zu lassen. Gleiches gilt für die Sollbruchlinien 6d und 6e des Trägerteils 1, die ebenfalls aufgerissen sind und somit ein großflächiges Austreten des Airbags ermöglichen. Die Sollbruchlinien 6, 6d, 6e und die Scharniergelenke 5, 5a können durch Fräsen des Trägerteils 1 hergestellt werden. Die Schaumstofffolie 2 und die Dekorschicht 3 muss nicht geschwächt werden, da ein definiertes Aufreißen der Dekorschicht 3 durch die Kanten der Klappen des Trägerteils 1, die unmittelbar unter der Dekorschicht 3 liegen, erreicht wird. Dies bedingt erhebliche Vorteile bezüglich der Sichtbarkeit und Reduzierung der Dekorschichtdicken.

Besonders bevorzugt im Sinne der vorliegenden Erfindung besteht die flächig über dem Trägerteil 1 befindliche Schaumstofffolie 2 aus einem PUR-, PP- und/oder PE-Schaumstoff, dessen Härte je nach Herstellungsbedingungen eingestellt werden kann.

Als Dekorschicht 3 kann ein sehr unterschiedliches Material verwendet werden, insbesondere bietet sich Kunststofffolie (Kompaktfolien, Slush-, Gieß- und Sprühhäute), Naturleder und/oder Kunstleder an. Ein Stoffmaterial ist mit Hilfe der vorliegenden Erfindung direkt einsetzbar, erfordert nicht notwendigerweise eine Zwischenschicht zwischen der Schaumstofffolie 2 und der Dekorschicht 3.

Wie oben ausgeführt weist die Dekorschicht 3 eine Sollbruchlinie 6 auf, die auf halber Höhe des Ausschnitts verläuft.

Der Seitenairbag ist wie im Stand der Technik bekannt vorzugsweise in einem einen Trichter der Türverkleidung zwangsgeführt, damit dieser definiert auf Höhe des Ausschnitts aus dem Trägerteil 1 ins Wageninnere austritt. Der Seitenairbag ist insbesondere in einem in den Figuren nicht dargestellten Airbaggehäuse angeordnet. Insoweit wird auf die DE 195 05 214 A1 voll inhaltlich Bezug genommen werden, da diese Technik auch bei der vorliegenden Erfindung angewendet werden kann. Die den Airbag aufweisende Airbageinheit kann erfindungsgemäß am Trägerteil 1 durch Schweißverbindungen oder auch formschlüssig durch Einschieben befestigt sein. Hieraus ergibt sich ein geringer Montageaufwand für den Automobilhersteller. Darüber hinaus ergeben sich Funktionsvorteile, da keine Pulsationseffekte wie bei Systemen des Standes der Technik, bei denen der Airbag am Türinnenblech befestigt ist. Hierbei pumpt die Verkleidung leicht, wodurch die Gefahr einer Fehlauslösung besteht (Luftsack entfaltet sich hinter der Verkleidung). Außerdem erhöht sich erfindungsgemäß die Systemgeschwindigkeit.

Ein wesentliches Sicherheitselement der vorliegenden Erfindung stellen die in den Figuren 1, 2 und 3 dargestellten flexiblen Haftelemente 8, 8a dar, die mit dem Trägerteil 1 beidseitig der Scharniergelenke 5, 5a oder einem nicht dargestellten Türinnenblech der Seitentür einerseits und der anderseits jeweils mit einem Abschnitt des Trägerteils 1 im Bereich des Ausschnitts 4 getrennt verbunden sind, wobei die Halteelemente 8, 8a gegebenenfalls durch eine Sollbruchlinie 6 getrennt sind. Diese erfindungsgemäße Ausführungsform verhindert das Eindringen von Teilen des Trägerteils 1, der Schaumstofffolie 2 und/oder der Dekorschicht 3 in das Fahrzeuginnere beim Auslösen des Airbags. Die Haltelemente 8, 8a können auch einstückig gefertigt und mit dem Trägerteil 1 verbunden sein. Die Trennung erfolgt beispielsweise während des Fräß-/Schwächungsprozesses des Trägerteils 1, wobei das Trägerteil 1, die Halteelemente 8, 8a und gegebenenfalls die Schaumstofffolie 2 sowie die Dekorschicht 3 mit einem Fräßwerkzeug getrennt bzw. geschwächt wird.

Für die fahrzeugseitige Befestigung der Halteelemente 8, 8a bestehen verschiedene Möglichkeiten. In einer bevorzugten Ausführungsform der vorliegenden Erfindung sind die Halteelemente 8, 8a in dem Trägerteil 1 durch umgeformte Schweißdome 10, 11 oder mittels Metall-/Kunststoffschrauben oder Federscheiben ausgebildet, die in den Domen 10, 11 befestigt sind. Alternativ ist es selbstverständlich auch möglich, diese Halteelemente 8, 8a an einem Türinnenblech der Seitentür direkt zu befestigen.

Innerhalb des Ausschnitts 4 und der Scharniergelenke 5, 5a ist es im Sinne der vorliegenden Erfindung besonders bevorzugt, die Halteelemente 8, 8a direkt mit dem Trägerteil 1 zu verbinden, beispielsweise zu verkleben oder zu verschweißen. Fig. 4 illustriert eine bevorzugte Ausführungsform der Halteelemente 8, 8a. Damit die Halteelemente 8, 8a ihre Funktion erfüllen können, sollten sie eine gewisse Flexibilität aufweisen. Dementsprechend sind im Sinne der vorliegenden Erfindung diese Halteelemente 8, 8a aus Gewebestreifen, gegebenenfalls mit einem Lochmuster 12, insbesondere aus Polyamid, Polyester oder Glasfaser auszubilden. Dieses Material weist ausreichende Flexibilität auf um möglichst ein reibungsloses Öffnen der Ausschnittsfläche des Trichterrandes zu ermöglichen. Andererseits weist ein derartiges Material eine ausreichende Festigkeit auf, um sicher zu verhindern, dass bei der Auslösung des Airbags keine Teile des Trägerteils 1, der Schaumstofffolie 2 oder der Dekorschicht 3 in das Fahrzeuginnere gelangen. Zur Verbesserung der Justiergenauigkeit der Positionierung der Haltelemente 8 und 8a an dem Trägerteil 1 ist es im Sinne der vorliegenden Erfindung besonders bevorzugt, die Halteelemente 8 und 8a über eine oder mehrere Aufrissbrücken 9, 9a oder 9b miteinander zu verbinden. Die Aufrissbrücken 9, 9a, 9b verlaufen praktisch entlang der Sollbruchlinie 6, so dass die Position der sich bei der Entfaltung des Airbags bildenden Linie in Kongruenz mit der Sollbruchlinie 6 stehen sollte.

Der Vorteil des Lochmusters 12 besteht insbesondere in der verbesserten Verklebung und die damit verbesserte Haftung mit dem Trägerteil 1.

Bei einem nichtdargestellten Ausführungsbeispiel sind das Türinnenblech der Seitentür, die Airbageinheit und die Türverkleidung mittels eines oder mehrere Befestigungspunkte miteinander fixiert, so dass ein Lösen der Airbageinheit auch bei hohen Belastungen - wie einem Seitenaufprall mit hohem Verformungsgrad der Seitentür - verhindert und eine zuverlässige Auslösung eines Airbags geleistet wird.

## Patentansprüche

1. Türverkleidung mit Seitenairbag-Modul eines Personenkraftwagens aus einem Trägerteil (1), und einer Dekorschicht (3), wobei das Trägerteil (1,) den Bereich eines Ausschnitts (4) im Trägerteil (1), hinter dem ein Seitenairbag-Modul angeordnet ist, im wesentlichen vollständig überdeckt und wenigstens eine Sollbruchlinie (6) aufweist, die auf halber Höhe des Ausschnitts (4) verläuft und diesen in Abschnitte teilt, **dadurch gekennzeichnet, dass** die Türverkleidung eine mit dem Trägerteil (1) und der Dekorschicht (3) fest verbundene Schaumstofffolie (2) und flexible, miteinander verbundene und voneinander, **trennbare** Halteelemente (8, 8a) aus Gewebestreifen aufweist, die mit dem Trägerteil (1) oder einem Türinnenblech der Seitentür einerseits und andererseits jeweils mit einem Abschnitt des Trägerteils (1) im Bereich des Ausschnitts (4) verbunden sind.

2. Türverkleidung nach Anspruch 1, **dadurch gekennzeichnet, dass** das Trägerteil (1) aus naturfaserverstärktem Epoxidharz, Polyurethan, Polypropylen oder einem Spritzgussteil besteht.

3. Türverkleidung nach einem der Ansprüche 1 oder 2, **dadurch gekennzeichnet, dass** die Schaumstofffolie (2) aus einem PP-, PE- und/oder PUR-Schaumstoff besteht.

4. Türverkleidung nach einem der Ansprüche 1 bis 3, **dadurch gekennzeichnet, dass** die Dekorschicht (3) aus Kunststofffolie, insbesondere Kompaktfolie, Slush-, Gieß- oder Sprühhaut, Naturleder und /oder Kunstleder besteht.

5. Türverkleidung nach einem der Ansprüche 1 bis 4, **dadurch gekennzeichnet, dass** das Trägerteil (1) und die Schaumstofffolie (2) eine Sollbruchlinie (6a) aufweist, die auf halber Höhe des Ausschnitts verläuft.

6. Türverkleidung nach Anspruch 5, **dadurch gekennzeichnet, dass** die Sollbruchlinie (6a) eine Nut oder Kerbe ist.

7. Türverkleidung nach einem der Ansprüche 1 bis 6, **dadurch gekennzeichnet, dass** die Sollbruchlinie (6) Unterbrechungen zur Stabilisierung der Oberfläche aufweist.

8. Türverkleidung nach Anspruch 1, **dadurch gekennzeichnet, dass** die Befestigungspunkte der Halteelemente (8, 8a) in dem Trägerteil (1) durch umgeformte Schweißdome (10, 11) oder mittels Metall-/Kunststoffschrauben oder Federscheiben ausgebildet sind, die in den Domen (10, 11) befestigt sind.

9. Türverkleidung nach einem der Ansprüche 7 oder 8, **dadurch gekennzeichnet, dass** die Halteelemente (8, 8a) mit dem Trägerteil (1) verklebt oder verschweißt sind.

10. Türverkleidung nach einem der Ansprüche 7 bis 9, **dadurch gekennzeichnet, dass** die Gewebestreifen aus Polyamid, Polyester oder Glasfaser bestehen.

11. Türverkleidung nach einem der Ansprüche 7 bis 10, **dadurch gekennzeichnet, dass** die Halteelemente (8, 8a) durch eine oder mehrere Aufrissbrücken (9, 9a, 9b) verbunden sind.

12. Türverkleidung nach einem der Ansprüche 7 bis 11, **dadurch gekennzeichnet, dass** die Aufrissbrücken (9, 9a, 9b) räumlich kongruent zu der Sollbruchlinie (6) sind.

13. Türverkleidung nach einem der Ansprüche 7 bis 12, **dadurch gekennzeichnet, dass** die Halteelemente (8, 8a) ein Lochbild (12) aufweisen.

14. Türverkleidung nach einem der Ansprüche 1 bis 13, **dadurch gekennzeichnet, dass** die den Airbag aufweisende Airbageinheit und das Trägerteil (1) zusammen mittels wenigstens einem Befestigungspunkt an dem Türinnenblech der Seitentür befestigt sind.

15. Türverkleidung nach Anspruch 1 bis 14, **dadurch gekennzeichnet dass** die den Airbag aufweisende Airbageinheit an dem Trägerteil (1) befestigt ist.

## Claims

1. A door trim part with a lateral airbag module for a passenger car, consisting of a support part (1) and a decorative layer (3), wherein said support part (1) substantially completely covers the region of a recess (4) in the support part (1), behind which a lateral airbag module is provided, and has at least one predetermined break line (6) which runs at a level midway over the recess (4), dividing it into sections, **characterized in that** the door trim part has a foam sheet (2) firmly bonded with the support part (1) and the decorative layer (3) as well as flexible holding members (8, 8a) which are connected with and detachable from one another and made of fabric strips, which are connected, on the one hand, with support part (1) or an interior metal panel of the side door and, on the other hand, with respective segments of the support part (1) in the region of recess (4).

2. The door trim part according to claim 1, **characterized in that** said support part (1) is made of natural-fiber reinforced epoxy resin, polyurethane, polypropylene, or an injection-molded part.

3. The door trim part according to either of claims 1 or 2, **characterized in that** said foam sheet (2) is made of a PP, PE and/or PUR foam.

4. The door trim part according to any of claims 1 to 3, **characterized in that** said decorative layer (3) is made of plastic sheet, especially compact sheet, slush-molded, cast or sprayed skin, natural leather and/or artificial leather.

5. The door trim part according to any of claims 1 to 4, **characterized in that** said support part (1) and foam sheet (2) have a predetermined break line (6a) which runs at a level midway over the recess.

6. The door trim part according to claim 5, **characterized in that** said predetermined break line (6a) is a groove or notch.

7. The door trim part according to any of claims 1 to 6, **characterized in that** said predetermined break line (6) comprises interruptions for stabilizing the surface.

8. The door trim part according to claim 1, **characterized in that** said attachment points of the holding members (8, 8a) in the support part (1) are formed by reshaped welding domes (10, 11) or by means of metal/plastic screws or spring washers attached in the domes (10, 11).

9. The door trim part according to either of claims 7 or 8, **characterized in that** said holding members (8, 8a) are bonded or welded to said support part (1).

10. The door trim part according to any of claims 7 to 9, **characterized in that** said fabric strips are made of polyamide, polyester or glass fiber.

11. The door trim part according to any of claims 7 to 10, **characterized in that** said holding members (8, 8a) are interconnected through one or more tear-up bridges (9, 9a, 9b).

12. The door trim part according to any of claims 7 to 11, **characterized in that** said tear-up bridges (9, 9a, 9b) are spatially congruent with said predetermined break line (6).

13. The door trim part according to any of claims 7 to 12, **characterized in that** said holding members (8, 8a) have a perforated pattern (12).

14. The door trim part according to any of claims 1 to 13, **characterized in that** the airbag unit comprising said airbag and said support part (1) are together attached to an interior metal panel of the side door through at least one attachment point.

15. The door trim part according to claims 1 to 14, **characterized in that** the airbag unit comprising said airbag is attached to support part (1).

## Revendications

1. Revêtement de porte avec un module d'airbag latérale d'une voiture de tourisme, consistant en une pièce de support (1) et une couche décorative (3), dans lequel ladite pièce de support (1) couvre essentiellement complètement la région d'une découpe (4) dans la pièce de support (1), derrière laquelle un module d'airbag latérale est pourvu, et comprend au moins une ligne destinée à la rupture (6) qui passe à mi-hauteur de la découpe (4) et divise la découpe en sections, **caractérisé en ce que** ledit revêtement de porte comporte une feuille en mousse (2) reliée fermement à lesdites pièce de support (1) et couche décorative (3), et des éléments de rétention (8, 8a) en bandes de tissu reliées entre eux et séparable l'un de l'autre, éléments qui sont reliés d'un part avec ladite pièce de support (1) ou une tôle intérieure de la porte latérale et d'autre part chacun avec une section de ladite pièce de support (1) dans la région de la découpe (4).

2. Revêtement de porte selon la revendication 1, **caractérisé en ce que** ladite pièce de support (1) est composée d'une résine époxy renforcée de fibres naturelles, de polyuréthane, de polypropylène ou d'une pièce moulée par injection.

3. Revêtement de porte selon l'une quelconque des revendications 1 ou 2, **caractérisé en ce que** ladite feuille en mousse (2) est composée d'une mousse de PP, PE et/ou PUR.

4. Revêtement de porte selon l'une quelconque des revendications 1 à 3, **caractérisé en ce que** ladite couche décorative (3) est composée d'une feuille de plastique, notamment d'une feuille compacte, d'une feuille moulée par slush-molding, de peau coulée ou projetée, de cuir naturel et/ou de cuir artificiel.

5. Revêtement de porte selon l'une quelconque des revendications 1 à 4, **caractérisé en ce que** ladite pièce de support (1) et ladite feuille en mousse (2) ont une ligne destinée à la rupture (6a) qui passe à mi-hauteur de la découpe.

6. Revêtement de porte selon la revendication 5, **caractérisé en ce que** ladite ligne destinée à la rupture (6a) est un sillon ou une entaille.

7. Revêtement de porte selon l'une quelconque des revendications 1 à 6, **caractérisé en ce que** ladite ligne destinée à la rupture (6) comporte des interruptions pour stabiliser la surface.

8. Revêtement de porte selon la revendication 1, **caractérisé en ce que** les points de fixation desdits éléments dé rétention (8, 8a) dans ladite pièce de support (1) sont formés dé dômes de soudage reformés (10, 11) ou par moyen de vices en métal/plastique ou rondelles élastiques fixées dans les dômes (10, 11).

9. Revêtement de porte selon l'une quelconque des revendications 7 ou 8, **caractérisé en ce que** lesdits éléments de rétention (8, 8a) sont collés ou soudés avec ladite pièce de support (1).

10. Revêtement de porte selon l'une quelconque des revendications 7 à 9, **caractérisé en ce que** lesdites bandes de tissu sont composées de polyamide, de polyester ou de fibre de verre.

11. Revêtement de porte selon l'une quelconque des revendications 7 à 10, **caractérisé en ce que** lesdits éléments de rétention (8, 8a) sont reliés entre eux par un ou plusieurs ponts de rupture (9, 9a, 9b).

12. Revêtement de porte selon l'une quelconque des revendications 7 à 11, **caractérisé en ce que** lesdits ponts de rupture (9, 9a, 9b) sont spatialement coïncidents avec ladite ligne destinée à la rupture (6).

13. Revêtement de porte selon l'une quelconque des revendications 7 à 12, **caractérisé en ce que** lesdits éléments de rétention (8, 8a) comportent un dessin de perforations (12).

14. Revêtement de porte selon l'une quelconque des revendications 1 à 13, **caractérisé en ce que** l'unité d'airbag comportant ledit airbag et ladite pièce de support (1) ensemble sont fixées à ladite tôle intérieure de la porte latérale par moyen d'au moins un point de fixation.

15. Revêtement de porte selon l'une quelconque des revendications 1 à 14, **caractérisé en ce que** l'unité d'airbag comportant ledit airbag est fixée à ladite pièce de support (1).
